# EUROPEAN PATENT APPLICATION

(11) **EP 4 502 990 A1**
(43) Date of publication of application: **05.02.2025**
(21) Application number: 23779236.1
(22) Date of filing: 03.03.2023
(51) Int. Cl.: G09C 1/00

(54) **INFORMATION PROVISION DEVICE, INFORMATION PROVISION METHOD, AND INFORMATION PROVISION PROGRAM**

(30) Priority: 31.03.2022 JP 2022060294
(71) Applicant: NTT Communications Corporation, Tokyo 100-8019 (JP)
(72) Inventor: TANAKA, Satoshi, Tokyo 100-8019 (JP); SAKURAI, Yoichi, Tokyo 100-8019 (JP); SAWADA, Masashi, Tokyo 100-8019 (JP); AIZU, Takuma, Tokyo 100-8019 (JP)
(74) Representative: Hoffmann Eitle
(86) International application number: PCT/JP2023/008066
(87) International publication number: WO 2023/189207

(57) **Abstract**

An information providing apparatus (20) identifies a type of a distribution of original data that have been stored in plural servers in a state of being divided and shared by secret sharing. The information providing apparatus (20) generates pseudo data, according to the identified type of the distribution. For example, the pseudo data are data randomly generated according to the distribution. In a case where the distribution of the original data is a normal distribution, the information providing apparatus (20) generates random data conforming to the normal distribution. The information providing apparatus (20) provides the generated pseudo data to an analyst.

## Description

### [Technical Field]

The present invention relates to an information providing apparatus, an information providing method, and an information providing program.

### [Background Art]

Secure computation systems conventionally perform statistical computation while maintaining data concealed and provide statistics obtained as results of the computation to users.

### [Citation List]

### [Patent Citation]

Patent Literature 1: International Publication Pamphlet No. WO 2019/124260

### [Summary of Invention]

### [Technical Problem]

However, this related technology has a problem that the secure computation systems are sometimes unable to provide sufficient information related to the concealed data to the analysts.

For example, an analyst can perform more efficient and precise analysis by looking at, not only statistics calculated from data, but also records themselves of the data and a scatter diagram, for example.

However, providing the records themselves of the data or the scatter diagram may violate restrictions on provision of personal information to a third party and its unintended use as prescribed in the Personal Information Protection Law.

### [Solution to Problem]

In order to solve the above-described problems and achieve the object, an identification unit configured to identify a type of a distribution of original data that have been stored in plural servers in a state of being divided and shared by secret sharing; a generation unit configured to generate pseudo data according to the type of the distribution identified by the identification unit; and a providing unit configured to provide the pseudo data generated by the generation unit are included.

### [Advantageous Effects of Invention]

According to the present invention, a secure computation system enables provision of sufficient information related to concealed data to an analyst.

### [Brief Description of Drawings]

FIG. 1 is a diagram illustrating a secure computation system according to an embodiment.
FIG. 2 is a diagram illustrating an example of a configuration of an information providing apparatus according to the embodiment.
FIG. 3 is a diagram illustrating a test using a quantile.
FIG. 4 is a flowchart illustrating a flow of a process by the information providing apparatus according to the embodiment.
FIG. 5 is a diagram illustrating an example of a computer that executes an information providing program.

### [Embodiments for Carrying Out the Invention]

Embodiments of an information providing apparatus, an information providing method, and an information providing program according to the present application will hereinafter be described in detail on the basis of the drawings. The present invention is not to be limited by the embodiments described hereinafter.

In the embodiments, the information providing apparatus, the information providing method, and the information providing program are implemented by some of functions of a secure computation system.

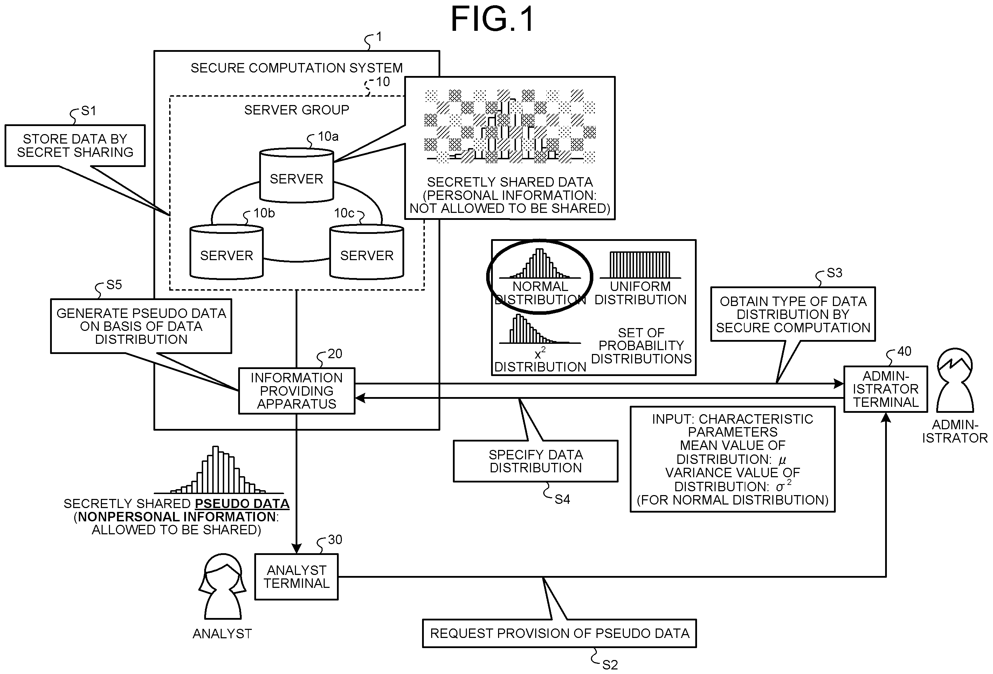

FIG. 1 is a diagram illustrating a secure computation system according to an embodiment. As illustrated in FIG. 1, a secure computation system 1 has a server group 10 and an information providing apparatus 20.

The server group 10 includes a server 10a, a server 10b, and a server 10c. The number of servers included in the server group 10 is not limited to that illustrated in FIG. 1 and may be two or more.

Furthermore, the secure computation system 1 enables exchange of data with an analyst terminal 30 used by an analyst and an administrator terminal 40 used by an administrator.

In this secure computation system 1, data are divided into plural pieces called shares. These shares are stored in the server 10a, the server 10b, and the server 10c included in the server group 10, in a distributed manner (secret sharing).

The secure computation system 1 executes secure computation by performing multiparty calculation, in which computation and exchange of data are performed among the plural servers included in the server group 10.

Each of the individual shares stored in the servers of the server group 10 is unmeaningful data. Therefore, reconstruction of the original data from a single share is not possible. However, obtaining a full set of the plural shares enables reconstruction of the original data.

For example, data related to attributes and bodies of individuals may be registered in the secure computation system 1. These data related to the attributes and the bodies are personal information and include, for example, the ages, the sexes, the heights, and the weights. The secure computation system 1 stores shares resulting from division of the registered data, into the servers.

A user of the data is unable to view the registered data themselves, but is able to view statistics based on the registered data. For example, in a case where the sexes and the weights of the individuals are included in data, the user is unable to view the sex and weight of each individual, but is able to view "the mean weight of males".

Furthermore, in that case, the secure computation system 1 enables calculation of "the mean weight of males" without reconstruction of the shares stored in the servers.

The secure computation system 1 enables various kinds of statistical computation without reconstruction of the shares. For example, the secure computation system 1 is able to implement statistical tests (which may hereinafter be simply referred to as tests) including: table operations, such as joining of rows and joining of columns; counting the number of records; calculation of statistics, such as the sum total, the mean, the largest value, the smallest value, and the sample variance; and t-tests. Furthermore, the secure computation system 1 enables analysis including regression analysis and principal component analysis. The statistical computation may be performed by a client apparatus (for example, the analyst terminal 30) not included in the secure computation system 1. In this case, the secure computation system 1 provides statistics needed for statistical computation, to the client apparatus.

For example, the secure computation system 1 enables secret sharing by use of a technique called Shamir's Threshold Secret Sharing. In this secret sharing, the secure computation system 1 stores three coordinates as a share in the servers, the three coordinates passing a polynomial having the original data as an intercept. The gradient of the polynomial is determined randomly and the share is thus not necessarily the same every time even if the original data are the same.

The secure computation system 1 enables reconstruction of the original data from the plural shares. If the polynomial is a linear expression, the intercept (corresponding to the original data) is able to be found in the secure computation system 1 from the point of intersection between a straight line joining two coordinates (corresponding to a share) and an axis. However, from a single coordinate, a straight line cannot be determined and the original data thus are unable to be reconstructed.

Furthermore, the secure computation system 1 enables calculation using the original data without reconstructing the shares. For example, a result of adding up shares represented by coordinates corresponds to a share resulting from addition of the original data of the shares together.

The information providing apparatus 20 provides information based on the shares that have been stored in the server group 10, to an analyst. The information providing apparatus 20 provides, not only the statistics calculated from the shares, but also pseudo data.

The pseudo data are data falsely generated to imitate the data that the shares originate from. For example, the pseudo data are random data conforming to a data distribution similar to that of the original data. Distributions referred to hereinafter may be restated as probability distributions.

A flow of a process related to provision of pseudo data will now be described by use of FIG. 1. Firstly, in the secure computation system 1, data are stored in the servers of the server group 10 by secret sharing beforehand (Step S1) .

The data themselves stored in the server group 10 are personal information and not allowed to be shared. Therefore, an analyst is unable to view the data stored in the server group 10.

The analyst thus request an administrator to provide pseudo data to be used in an analysis (Step S2). For example, the analyst makes a request to the administrator terminal 40 via the analyst terminal 30.

The administrator obtains the type of the data distribution of data, for which generation of the pseudo data has been requested, by secure computation (Step S3). Through this secure computation, the information providing apparatus 20 identifies the type of the distribution by performing a test on the original data and presents the identified type of the distribution to the administrator.

The administrator then checks the presented type of the distribution and inputs a data distribution via the administrator terminal 40 (Step S4). This data distribution is characteristic parameters corresponding to the type of the distribution. For example, in a case where the presented type of the distribution is a normal distribution, the administrator inputs a mean value µ and a variance value σ².

The data distribution may be specified by the analyst. Furthermore, the data distribution may be automatically determined by the information providing apparatus 20 on the basis of a result of the test.

The information providing apparatus 20 generates the pseudo data on the basis of the specified data distribution (Step S5). For example, in a case where the type of the distribution is a normal distribution and a mean value µ and a variance value σ² have been specified, the information providing apparatus 20 generates random data conforming to a normal distribution having the mean value of µ and the variance value of σ².

Furthermore, the number of sets of data generated by the information providing apparatus 20 may be a number specified by the administrator. In addition, because the pseudo data are not personal information, the pseudo data are allowed to be shared. What is more, the pseudo data may be provided in a state of being able to be downloaded by an unspecified number of users. Furthermore, the information providing apparatus 20 may provide an analysis environment where the pseudo data are able to be used.

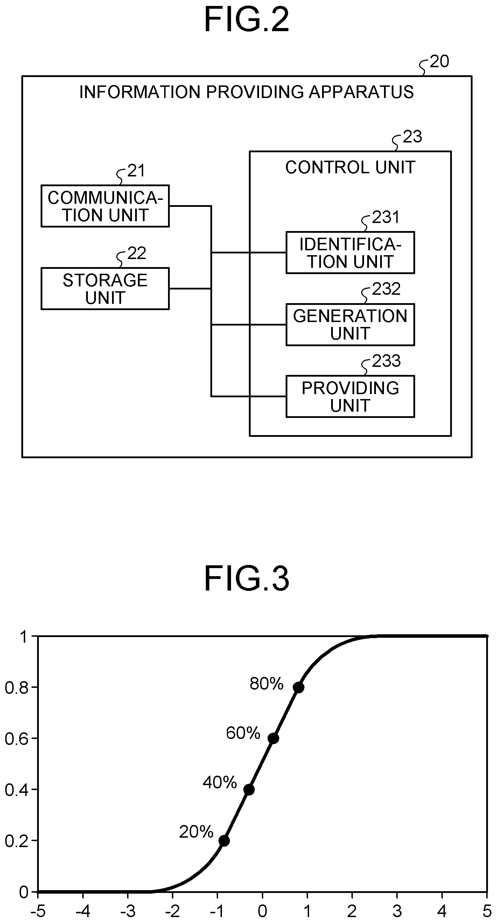

A configuration of the information providing apparatus 20 will now be described by use of FIG. 2. FIG. 2 is a diagram illustrating an example of a configuration of the information providing apparatus according to the embodiment.

The following description is on each unit of the information providing apparatus 20. As illustrated in FIG. 2, the information providing apparatus 20 has a communication unit 21, a storage unit 22, and a control unit 23.

The communication unit 21 performs communication of data to and from another apparatus. For example, the communication unit 21 is a network interface card (NIC). The communication unit 21 is capable of transmitting and receiving data to and from the other apparatus.

The storage unit 22 is a storage device, such as a hard disk drive (HDD), a solid state drive (SSD), or an optical disk. The storage unit 22 may be a semiconductor memory, in which data are rewritable, such as a random access memory (RAM), a flash memory, or a nonvolatile static random access memory (NVSRAM). The storage unit 22 stores an operating system (OS) and various programs executed at the information providing apparatus 20.

The control unit 23 controls the whole information providing apparatus 20. For example, the control unit 23 is: an electronic circuit, such as a central processing unit (CPU), a microprocessing unit (MPU), or a graphics processing unit (GPU); or an integrated circuit, such as an application specific integrated circuit (ASIC) or a field programmable gate array (FPGA). Furthermore, the control unit 23 has an internal memory for storing programs prescribing various processing sequences and control data, and executes each process by using the internal memory.

Through operation of various programs, the control unit 23 functions as various processing units. For example, the control unit 23 has an identification unit 231, a generation unit 232, and a providing unit 233.

The identification unit 231 identifies the type of the distribution of the original data, which have been stored in the plural servers (the server group 10) in a state of being divided and shared by secret sharing.

The identification unit 231 is capable of identifying the type of the distribution by performing a statistical test through secure computation. For example, the identification unit 231 performs a t-test or a chi-square test, by using the shares.

In the test for the distribution by the secure computation, whether records of the original data conform to the distribution needs to be checked. However, reconstruction of the records is not desirable in terms of the nature of secret sharing.

The identification unit 231 thus performs the statistical test by using a measure of central tendency that is a predetermined quantile resulting from sorting of the records of the original data. The identification unit 231 is thereby able to perform the test at high speed without reconstructing the records.

A statistical test using a quantile as a measure of central tendency will now be described by use of FIG. 3. FIG. 3 is a diagram illustrating the test using a quantile.

For example, in a case where the original data conform to a certain probability distribution, a record of a quantile at p% when the records included in the original data are sorted in ascending order is considered to conform to the quantile at p% of the probability distribution.

The identification unit 231 thus performs a test using a measure of central tendency that is a predetermined quantile of the original data, by using a quantile function. For example, in a case where the original data or the original data that have been normalized conform to a standard normal distribution, as illustrated in FIG. 3, quantiles for when p = 20, 40, 60, and 80 are about -0.842, -0.253, 0.253, and 0.842.

By checking the conformance to the distribution by using a sufficient number of quantiles, the identification unit 231 is able to perform the test at high speed.

The generation unit 232 generates pseudo data according to the type of the distribution identified by the identification unit 231.

For example, in a case where the type of the distribution has been identified as a normal distribution by the identification unit 231, the generation unit 232 generates pseudo data that are random data conforming to a normal distribution having a mean value and a variance value that have been specified.

The providing unit 233 provides the pseudo data generated by the generation unit 232. The providing unit 233 may store the pseudo data in a predetermined server and distribute a URL that enables the pseudo data to be downloaded from the server.

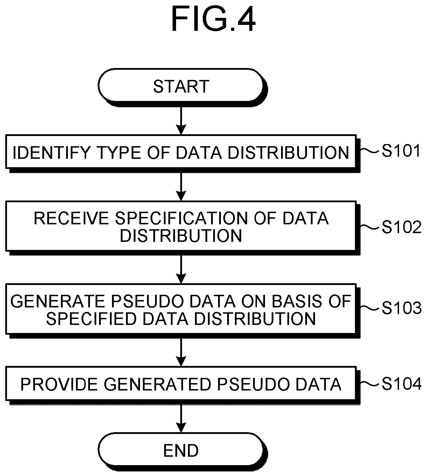

FIG. 4 is a flowchart illustrating a flow of a process by the information providing apparatus according to the embodiment. As illustrated in FIG. 4, firstly, the information providing apparatus 20 identifies the type of the data distribution of the original data that have been stored as shares by secret sharing (Step S101).

Subsequently, the information providing apparatus 20 receives specification of a data distribution (Step S102). For example, the information providing apparatus 20 receives input of characteristic parameters (for example, a mean value and a variance value) corresponding to the identified type of the distribution.

Subsequently, the information providing apparatus 20 generates pseudo data on the basis of the specified data distribution (Step S103). The information providing apparatus 20 then provides the pseudo data generated (Step S104). Step S101 and Step S103 are performed by secure computation.

### Effects of Embodiment

As described thus far, the identification unit 231 identifies the type of the distribution of the original data, which have been stored in the plural servers in a state of being divided and shared by secret sharing. The generation unit 232 generates pseudo data according to the type of the distribution identified by the identification unit 231. The providing unit 233 provides the pseudo data generated by the generation unit 232.

The information providing apparatus 20 thus generates, not only statistics, but also pseudo data, and provides the pseudo data to an analyst. As a result, according to the embodiment, the secure computation system enables provision of sufficient information related to concealed data to the analyst.

In a case where the type of the distribution has been identified as a normal distribution by the identification unit 231, the generation unit 232 generates pseudo data that are random data conforming to a normal distribution having a mean value and a variance value that have been specified. Pseudo data in accordance with a request by an analyst are thereby able to be generated.

The identification unit 231 identifies the type of the distribution by performing a statistical test through secure computation. Pseudo data conforming to the same distribution as the original data are thereby able to be provided.

The identification unit 231 performs the statistical test by using a measure of central tendency that is a predetermined quantile resulting from sorting of the records of the original data. The test is thereby able to be performed at high speed.

### System Configuration

Furthermore, each component of the apparatuses has been functionally and conceptionally illustrated, and is not necessarily physically configured as illustrated in the drawings. That is, specific modes of separation and integration of the apparatuses are not limited to those illustrated in the drawings, and all or part of the apparatuses may be configured to be functionally or physically separated or integrated in any units according to various loads and use situations. Furthermore, all or any part of the processing functions executed at the apparatuses may be implemented by a central processing unit (CPU) and a program analyzed and executed by the CPU, or may be implemented as hardware by wired logic. The program may be executed not only by a CPU but also by another processer, such as a GPU.

Furthermore, among the above described processes according to the embodiment, all or part of any process described as being executed automatically may be executed manually, or all or a part of any process described as being executed manually may be executed automatically by a publicly known method. In addition, unless otherwise specified herein, any processing sequence, any control sequence, any specific name, or any of information including various data and parameters, which has been described above and illustrated in the drawings may be freely modified.

### Program

In one embodiment, the information providing apparatus 20 is able to be implemented by an information providing program being installed on a desired computer, the information providing program serving as package software or online software and being for execution of the above described information providing process. For example, causing an information processing apparatus to execute the information providing program enables the information processing apparatus to function as the information providing apparatus 20. The information processing apparatus referred to herein includes a desktop or laptop personal computer. In addition, the information processing apparatus may include, for example: a mobile communication terminal, such as a smartphone, a cellular phone, or a personal handyphone system (PHS); or a slate terminal, such as a personal digital assistant (PDA).

Furthermore, a terminal apparatus used by a user may serve as a client, and the information providing apparatus 20 may be implemented as an information providing server apparatus that provides services related to the above described information providing process to the client. For example, the information providing server apparatus is implemented as a server apparatus that provides information providing services, with specification of the original data serving as input and pseudo data serving as output.

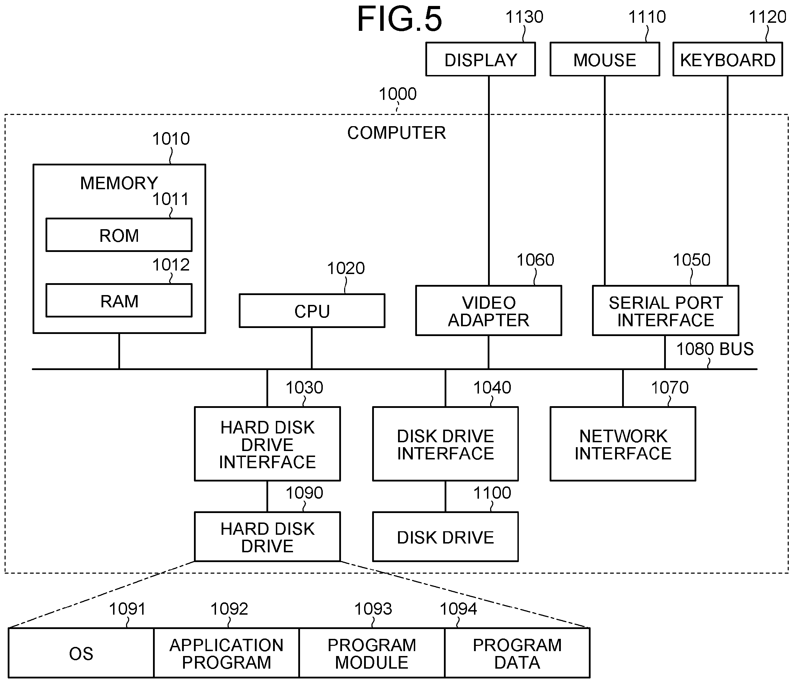

FIG. 5 is a diagram illustrating an example of a computer that executes the information providing program. A computer 1000 has, for example, a memory 1010 and a CPU 1020. Furthermore, the computer 1000 has a hard disk drive interface 1030, a disk drive interface 1040, a serial port interface 1050, a video adapter 1060, and a network interface 1070. These units are connected to one another via a bus 1080.

The memory 1010 includes a read only memory (ROM) 1011 and a random access memory (RAM) 1012. The ROM 1011 stores therein, for example, a boot program, such as a basic input output system (BIOS). The hard disk drive interface 1030 is connected to a hard disk drive 1090. The disk drive interface 1040 is connected to a disk drive 1100. For example, an attachable and detachable storage medium, such as a magnetic disk or an optical disk, is inserted in the disk drive 1100. The serial port interface 1050 is connected to, for example, a mouse 1110 and a keyboard 1120. The video adapter 1060 is connected to, for example, a display 1130.

The hard disk drive 1090 stores therein, for example, an OS 1091, an application program 1092, a program module 1093, and program data 1094. That is, a program prescribing each process by the information providing apparatus 20 is implemented as the program module 1093 having, described therein, code that is able to be executed by a computer. The program module 1093 is stored in, for example, the hard disk drive 1090. For example, the program module 1093 for executing a process similar to that of the functional configuration in the information providing apparatus 20 is stored in the hard disk drive 1090. The hard disk drive 1090 may be substituted by a solid state drive (SSD) .

Furthermore, setup data used in the above described processes according to the embodiment are stored as the program data 1094, in, for example, the memory 1010 or the hard disk drive 1090. The CPU 1020 loads the program module 1093 and the program data 1094 stored in the memory 1010 or hard disk drive 1090 into the RAM 1012 as necessary, and executes the above described processes according to the embodiment.

The program module 1093 and the program data 1094 are not necessarily stored in the hard disk drive 1090, and for example, may be stored in an attachable and detachable storage medium and read by the CPU 1020 via the disk drive 1100. Or the program module 1093 and the program data 1094 may be stored in another computer connected via a network (a local area network (LAN), or a wide area network (WAN), for example). The program module 1093 and the program data 1094 may then be read out from the other computer by the CPU 1020 via the network interface 1070.

### [Explanation of Reference]

- 1: SECURE COMPUTATION SYSTEM
- 10: SERVER GROUP
- 10a, 10b, 10c: SERVER
- 20: INFORMATION PROVIDING APPARATUS
- 21: COMMUNICATION UNIT
- 22: STORAGE UNIT
- 23: CONTROL UNIT
- 30: ANALYST TERMINAL
- 40: ADMINISTRATOR TERMINAL
- 231: IDENTIFICATION UNIT
- 232: GENERATION UNIT
- 233: PROVIDING UNIT

## Claims

1. An information providing apparatus comprising:
an identification unit configured to identify a type of a distribution of original data that have been stored in plural servers in a state of being divided and shared by secret sharing;
a generation unit configured to generate pseudo data according to the type of the distribution identified by the identification unit; and
a providing unit configured to provide the pseudo data generated by the generation unit.

2. The information providing apparatus according to claim 1, wherein in a case where the type of the distribution has been identified as a normal distribution by the identification unit, the generation unit generates, as the pseudo data, random data conforming to a normal distribution having a mean value and a variance value that have been specified.

3. The information providing apparatus according to claim 1 or 2, wherein the identification unit identifies the type of the distribution by performing a statistical test through secure computation.

4. The information providing apparatus according to claim 3, wherein the identification unit performs the statistical test by using a measure of central tendency that is a predetermined quantile resulting from sorting of records of the original data.

5. An information providing method executed by an information providing apparatus, the information providing method comprising:
an identification process of identifying a type of a distribution of original data that have been stored in plural servers in a state of being divided and shared by secret sharing;
a generation process of generating pseudo data according to the type of the distribution identified by the identification process; and
a providing process of providing the pseudo data generated by the generation process.

6. An information providing program that causes a computer to function as the information providing apparatus according to any one of claims 1 to 4.
